# EUROPEAN PATENT APPLICATION

(11) **EP 3 456 216 A1**
(43) Date of publication of application: **20.03.2019**
(21) Application number: 18194487.7
(22) Date of filing: 14.09.2018
(51) Int. Cl.: A42B 3/12

(54) **HELMET INSERT**

(30) Priority: 14.09.2017 GB 201714809
(71) Applicant: Pembroke Bow Limited, Mickle Trafford Chester CH2 4QH (GB)
(72) Inventor: BUREK, Roy, Chester, CH2 4QH (GB)
(74) Representative: Games, Robert Harland

(57) **Abstract**

An insert (10) for a helmet comprises a plurality of layers (12), each layer (12) being of a Miura-Ori fold geometry.

## Description

The present invention relates to a shock-absorbing insert for a helmet.

### BACKGROUND TO THE INVENTION

Helmets are used to protect a wearer's head from potential impacts to prevent head injury, particularly damage to the brain. Helmets are worn for this purpose in a variety of situations: in sports, such as horse riding or climbing, military operations, work in construction or industry or riding motorcycles. A typical helmet for use in such applications may comprise a hard outer shell made of a lightweight high-strength material, typically a plastics material, possibly including Kevlar, and at least one shock absorbing insert inside the outer shell.

In the event of an impact, the outer shell serves to spread the impact force over a larger area, protecting against penetrating impacts. The shock absorbing insert deforms and absorbs kinetic energy, reducing the acceleration of the wearer's head to minimise the chance of damaging the wearer's brain. It is desirable to maximise kinetic energy absorption over a given deformation distance. This may be achieved by minimising elastic deformation or controlling the rate at which elastically deformed material returns to its original shape. The available deformation distance is limited by the thickness of the insert, which is ideally small as thicker inserts make the helmet unwieldly, and may in some cases increase the risk of head injury. Thicker inserts may also increase the propensity for overheating, or require additional air vents to be provided. It is also desirable to minimise the weight of the insert, as heavier helmets also increase the risk of head injury and may fatigue the wearer after extended use.

It is an object of the present invention to provide an improved insert for a helmet.

### STATEMENT OF INVENTION

According to a first aspect of the present invention, there is provided an insert for a helmet comprising a plurality of layers, each layer being of a Miura-Ori fold geometry. The Miura-Ori fold geometry provides a strong and lightweight structure with good energy absorption characteristics. The Miura-Ori fold geometry also provides several parameters that can be varied, allowing its properties to be tuned to a particular application. For example, different helmet inserts could be provided for wearers who play different positions in an American football team. It will be appreciated that the layers need not be identical, and it may be advantageous to provide certain layers with different geometries. Further layers may be provided which do not have a Miura-Ori fold geometry.

An upper surface of the insert may have an overall curvature to conform to an inner surface of an outer shell of a helmet. This allows the insert to fit within the helmet and contact the inner surface of the outer shell of the helmet so that any impact applied to the outer shell is transmitted to the insert so that energy may be absorbed. It is envisaged that the insert may be provided as a single continuous piece, or as several discrete sections.

Each layer may have an overall curvature. This allows the insert to have a curved outer surface while providing properties that are substantially uniform over the surface of the helmet, thus avoiding fault-lines or weak points.

Each layer may include a plurality of parallel straight folds and a plurality of transverse folds, each transverse fold being orientated transverse to the plurality of parallel straight folds to intersect the parallel straight folds,
each transverse fold changing direction at each intersection with a parallel straight fold to form a zigzag and being either a mountain fold along its entire extent or a valley fold along its entire extent, the transverse folds being arranged alternately on the layer so that each mountain fold neighbours two valley folds,
and each parallel straight fold alternating along its extent between being a mountain fold and a valley fold, changing from a mountain fold to a valley fold or from a valley fold to a mountain fold at each intersection with a transverse fold.

This implements the Miura-Ori fold geometry in the layers. The properties of the folds, such as fold angles or the separation between folds may be varied to tune the material properties.

Each transverse fold may have a fold angle, and all the transverse folds of each layer may have the same fold angle. This provides an insert with uniform properties.

The plurality of layers may be divided into a first group and a second group, the transverse folds of the layers of the first group having a first fold angle, and the transverse folds of the layers of the second group having a second fold angle, the first fold angle being greater than the second fold angle, the layers being stacked to alternate between layers of the first group and layers of the second group. This provides a three dimensional open-cell structure with desirable energy absorbing properties. The open-cell nature of the structure flows from the fact that continuous channels are formed between the transverse folds of neighbouring layers. This allows air to flow freely within, into and out of the structure. This provides ventilation so that the wearer does not overheat, and alters the deformation properties of the insert, as no air is compressed as the insert is deformed.

The fold angle of each transverse fold of each layer of the first group is preferably between 30 degrees and 180 degrees but not equal to 180 degrees.

The fold angle of each transverse fold of each layer of the first group is most preferably 95 degrees.

A wall thickness of each layer is preferably between 0.5 mm and 2 mm. This range of values represents a compromise between energy absorption and weight.

The wall thickness of each layer is most preferably 1 mm.

The insert may be integrally formed. This provides a convenient method of manufacture with reduced complexity relative to a folding and joining process.

The insert may be formed by means of an additive manufacturing method. This allows the parameters of the insert, such as fold angles, orientations and wall thicknesses to be varied rapidly, so that an optimal configuration for a given situation may be achieved.

The insert may be formed by means of a selective laser sintering method. Selective laser sintering allows fabrication of structures with overhanging parts, as all parts are supported by unsintered material during the build process. The insert may be formed by means of fused deposition modelling.

The insert may be formed of an ester-based thermoplastic polyurethane. These materials are readily available and their properties make them suitable for selective laser sintering.

The insert may comprise an elastomeric material. Preferably the insert comprises an AM elastomeric material, viz an elastomeric material formed by additive manufacture (AM). The insert may comprise a viscoelastic material. When provided as part of a Miura-Ori structured material, this absorbs or dissipates energy across a range of impact speeds during an impact, thereby providing effective protection whether a person experiences a high- or low-speed impact. In other words, providing a structured viscoelastic material widens the performance window of the insert. Preferably the material is a viscoelastic plastic.

The insert may be formed of one of Luvosint (RTM) TPU X92A-1; Luvosint (RTM) TPU X92A-2 and Luvosint (RTM) TPU X97A-1 WT.

According to a second aspect of the invention, there is provided a method of manufacturing an insert for a helmet in accordance with the first aspect of the invention,
the method comprising the step of:
manufacturing a plurality of layers of the insert integrally.

The step of manufacturing a plurality of the layers of the insert integrally may include manufacturing the insert using an additive manufacturing process.

The additive manufacturing process may be selective laser sintering. The additive manufacturing process may be fused deposition modelling.

The method may further comprise the initial steps of:
using finite element analysis to model the dependence of the performance of the insert in an impact on a property of the insert; and
selecting an optimal value of that property based on the result of the above step.

This allows different structures to be trialled in the manufacturing process, varying according to parameters such as fold angles, wall thickness, the relative orientations of the layers and the orientation of the stacking direction of the layers within the helmet. The configuration that minimises the acceleration of the head of the wearer in a given impact situation may thus be determined. The combination of finite element analysis and additive manufacturing allows the parameter space to be explored more rapidly and cost-effectively than was possible with previous design and manufacturing techniques.

The property may be a fold angle of one of the folds.

The property may be a wall thickness of one of the layers.

The property may be a relative offset between a pair of layers.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view of a first embodiment of an insert for a helmet;
Figure 2 shows a plan view of a flattened layer for an insert for a helmet;
Figure 3 shows a perspective view of the flattened layer of Figure 2;
Figure 4 shows a plan view of a chevron;
Figure 5 shows a perspective view of the chevron of Figure 4;
Figure 6 shows a perspective view of a stack of flattened layers for an insert for a helmet; and
Figure 7 shows a perspective view of a second embodiment of an insert for a helmet, within a helmet outer shell.

### DESCRIPTION OF PREFERRED EMBODIMENTS

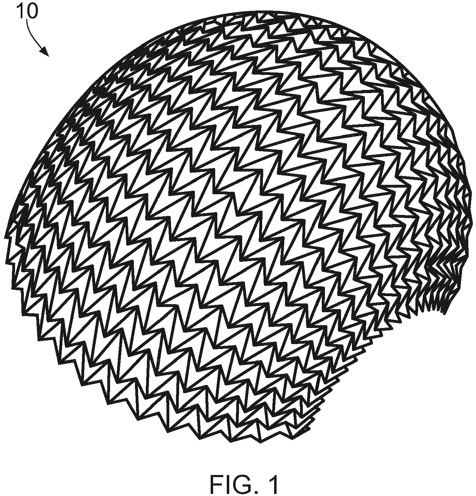

Referring firstly to Figure 1, an insert for a helmet is indicated generally at 10. The insert 10 is intended to be fitted within a substantially hard outer shell of a helmet. A soft liner is intended to be inserted into the interior of the insert 10 to sit between the insert 10 and the wearer's head in use. The insert 10 comprises a plurality of layers (not labelled in Figure 1 in the interests of clarity). The insert 10 has a curved outer surface adapted to abut an inner surface of a helmet outer layer in use.

The layers are described below with reference to a single exemplary layer 12. The exemplary layer consists of a sheet of material folded to produce a three-dimensional structure. The exemplary layer 12 has a planar overall geometry, that is, it is substantially flat. However, it will be understood that the layers used in the helmet have a curved overall geometry. The features of the layers of the helmet insert 10 are small relative to the radius of curvature of the helmet surface, and so the layers may be considered locally flat for the purposes of describing their features.

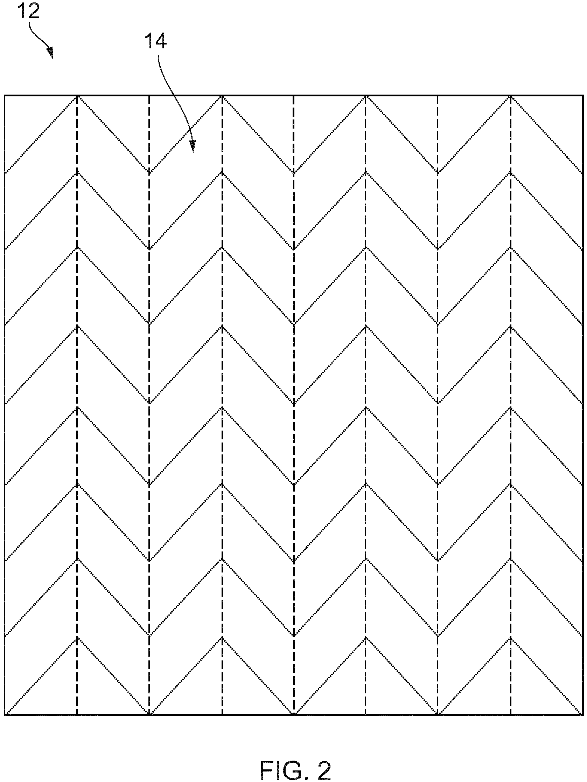

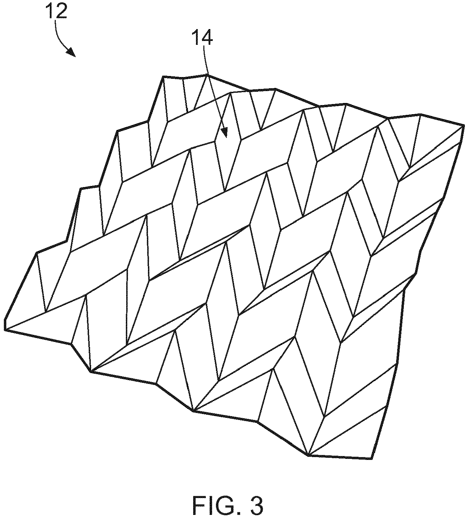

Referring now to Figures 2 and 3, an exemplary layer is indicated generally at 12. It will be understood that the size and shape of the layer 12 shown in Figures 2 and 3 is different to the sizes and shapes of the layers of the helmet insert 10, and the layer 12 of Figures 2 and 3 is illustrated to show the repeating fold pattern of the layer 12. The layer 12 includes a plurality of straight folds (indicated by dashed lines in Figure 2) and a plurality of transverse folds (indicated by dotted lines in Figure 2). It will be understood that the phrase 'fold' is employed to describe the resultant shape, and not to indicate that the resultant shape was produced by a folding process.

The wall thickness of the layer 12 is 1mm. Wall thickness will be understood to refer to the thickness of the sheet of material.

The straight folds are mutually parallel. The straight folds are distributed evenly on the layer 12. The separation of any neighbouring pair of straight folds is the same as that of any other neighbouring pair of straight folds.

It will be understood that the straight folds are straight when viewed from above, but form zigzags when viewed from the side.

The transverse folds are orientated transverse to the straight folds. Each transverse fold therefore intersects some or all of the straight folds, and each straight fold intersects some or all of the transverse folds. In the layer 12 shown, each straight fold intersects every transverse fold, and each transverse fold intersects every straight fold. The transverse folds are distributed evenly on the layer 12. The separation of any neighbouring pair of transverse folds is the same as that of any other neighbouring pair of transverse folds.

Each transverse fold is a zigzag when viewed from above, meaning that its orientation alternates along its length between a first orientation and a second orientation. The orientation of each transverse fold changes at each intersection of that fold with a straight fold. All portions of transverse folds located between a given pair of straight folds are mutually parallel.

Each straight fold alternates along its length between being a mountain fold and being a valley fold. Each straight fold changes between a mountain fold and a valley fold at each intersection with a transverse fold.

Each transverse fold is either a mountain fold along its entire length or a valley fold along its entire length. The plurality of transverse folds is arranged on the layer 12 to alternate between mountain folds and valley folds. Each transverse fold is between two other transverse folds, which are of a different type (mountain or valley) to said fold. All of the transverse folds which are mountain folds are co-planar. All of the transverse folds which are valley folds are co-planar. The plane of the transverse folds which are mountain folds is situated above the plane of the transverse folds which are valley folds.

The exemplary layer 12 comprises a plurality of three dimensional chevrons 14. Only one chevron 14 is labelled for clarity. An exemplary chevron 14 will be described in detail below. The chevrons 14 are tessellated to form a repeating herringbone pattern. In this embodiment, the tessellation has no gaps. In other embodiments, there may be gaps in the tessellation.

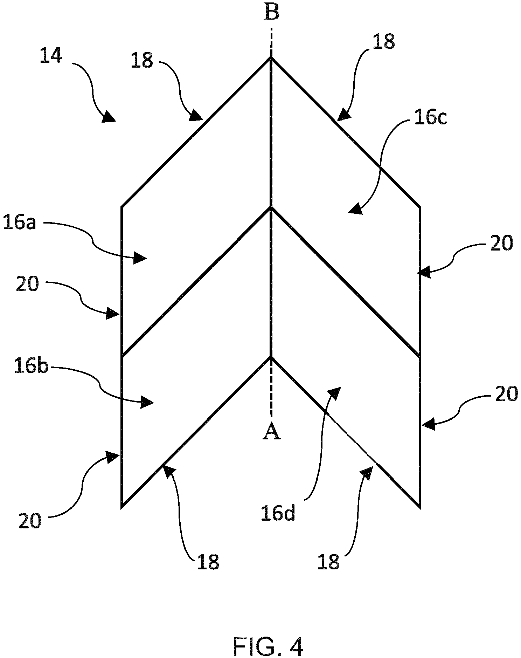

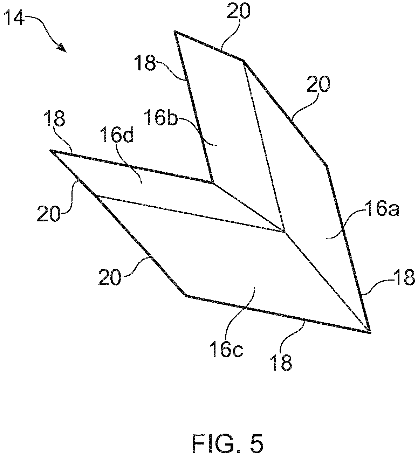

Referring now to Figures 4 and 5, a single chevron is indicated generally at 14. The chevron 14 comprises four faces 16a, 16b, 16c, 16d. Each face 16a, 16b, 16c, 16d is a parallelogram. In this embodiment, the faces 16a, 16b, 16c, 16d are identical, save for their position and orientation. That is, the shapes and sizes of the faces 16a, 16b, 16c, 16d are identical. The chevron 14 is symmetrical about the line AB. Two faces 16a, 16b are positioned on a first side of the line AB and two faces 16c, 16d are positioned on a second side of the line AB. Each face 16a, 16b, 16c, 16d has two long sides 18 and two short sides 20. The faces 16a, 16b; 16c, 16d on the same side of the line AB share a long side 18. The faces 16a, 16b; 16c, 16d on the same side of the line AB are not co-planar, but are at an angle to one another. The faces 16a, 16c; 16b, 16d that are opposed across the line AB share a short side 20.

The join between a first pair of faces 16a, 16c opposed across the line AB forms a mountain fold portion of one of the straight folds of the layer 12. The join between a second pair of faces 16b, 16d forms a valley fold portion of that straight fold. Each long side 18 forms part of a transverse fold of the layer 12.

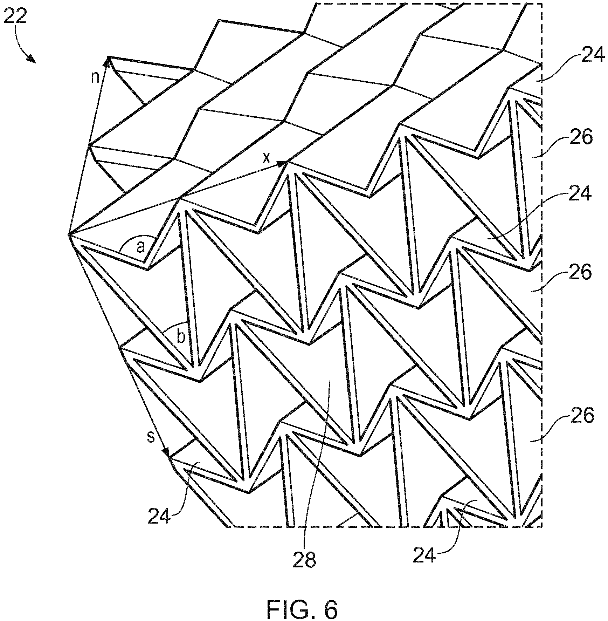

Referring now to Figure 6, a stack of layers 24, 26 is indicated generally at 22. The stack 22 in Figure 18 illustrates the relationship between adjacent layers 24, 26 in the helmet insert 10. However, it will be understood that the stack 22 in Figure 6 is shown with an overall planar geometry, while the stacked layers in the helmet insert have an overall curved geometry. The means of transforming the stack 22 of Figure 6 to a stack with an overall curved geometry will be well known to the person skilled in the art of computer assisted design, and so will not be recited here. It should be noted that although the exemplary layer 12 of Figures 2 and 3 is wide enough to incorporate seven vertices of each transverse fold, the layers 24, 26 shown stacked in Figure 6 are less wide. The layers used in the helmet insert 10 may be more or less wide.

A coordinate system is indicated by the arrows *x, s* and *n,* where *x* is a direction substantially aligned with the straight folds, i.e., joining a pair of equivalent points along a straight fold, *n* is a direction substantially aligned with the transverse folds, i.e., joining a pair of equivalent points along a transverse fold, and *s* is a direction substantially normal to the layer, i.e. joining a pair of equivalent points on a pair of layers 24, 26.

The stack 22 comprises a plurality of shallow layers 24, and a plurality of deep layers 26, each of which is similar to a shallow layer 26 having been linearly stretched in a direction normal to the overall plane of the layer (direction s in Figure 6). All the layers 24, 26 are otherwise identical.

While layers 24, 26 of two types are provided in this embodiment, other embodiments of a helmet liner according to the present invention may include other types of layers, distinguished by fold angle or wall thickness from the former two types 24, 26. Alternatively, all the layers of the insert could be identical, save for their relative orientations.

Each transverse fold of each shallow layer 24 defines the same acute angle (indicated *a* on Figure 6). The acute angle *a* defined by each transverse fold of each shallow layer 24 may be between 30 degrees and 180 degrees, but not equal to 180 degrees. In this embodiment, the angle *a* is 95 degrees.

Each transverse fold of each deep layer 26 defines the same acute angle (indicated *b* on Figure 6). The angle *b* is smaller than the angle *a.* The acute angle *b* defined by each transverse fold of each deep layer 26 may be between 25 degrees and 130 degrees. In this embodiment, the angle *b* is 36 degrees.

The layers 24, 26 are stacked alternating between shallow layers 24 and deep layers 26. Each deep layer 26 is between and connected to a pair of shallow layers 24. Each transverse fold of each deep layer 26 contacts or coincides with a transverse fold of a shallow layer 24. It will be understood that although the structure has been described here in terms of separate folded layers 24, 26, it is in fact integrally manufactured.

In this embodiment, each transverse fold of each deep layer 26 which is a mountain fold coincides with a transverse fold of a shallow layer 24 which is a mountain fold. In this embodiment, each transverse fold of each deep layer 26 which is a valley fold coincides with a transverse fold of a shallow layer 24 which is a valley fold. A cross-section of the stack 22 in the *x-s* plane is therefore a tessellation of quadrilaterals 28 with re-entrant angles, each quadrilateral 28 being a symmetrical pair of scalene triangles joined along a side that is not the longest side. Only one quadrilateral is labelled for clarity in Figure 6.

An alternative embodiment is possible in which each transverse fold of each deep layer 26 which is a mountain fold coincides with a transverse fold of a shallow layer 24 which is a valley fold. In this embodiment, each transverse fold of each deep layer 26 which is a valley fold coincides with a transverse fold of a shallow layer 24 which is a mountain fold. A cross-section of the stack in the *x**-**s* plane is therefore a tessellation of quadrilaterals without re-entrant angles, for example kite shapes or diamond shapes.

Alternatively, the transverse folds of the deep layers 26 may not coincide with the transverse folds of the shallow layers 24. There may be an offset between the layers 24, 26, for example in the *n* direction or in the *x* direction, or there may be an offset in both these directions. In addition to the offset, consecutive layers may be rotated relative to one another in the *x-n* plane.

Referring once more to Figure 1, the helmet insert 10 is formed of a stack of layers similar to the stack 22 shown in Figure 6 that has been deformed to have an overall curvature. Although the insert 10 is described as deformed, the insert 10 is not manufactured by a process of deformation but is rather integrally formed in its final curved shape. The phrase deformed is employed to aid the understanding of the final shape and structure of the insert 10. The stack 22 of layers 24, 26 is orientated such that the s and *x* directions are tangential to the surface of the helmet in use and the *n* direction is in a radial direction relative to the surface of the helmet. The layers are therefore orientated 'edge on' to the surface of the helmet.

In use, the insert 10 is placed within the outer shell of the helmet and is secured there. The insert 10 may be secured by adhesive, straps, clips or other fixings. The insert 10 may be removably secured or it may be permanently secured. A lining may be provided between the insert 10 and the head of the wearer, that is, on the underside of the insert 10. The lining may be padded and breathable. The helmet may include other features such as a chinstrap or a visor, but these will be familiar to those skilled in the art of helmet design and so will not be described in detail.

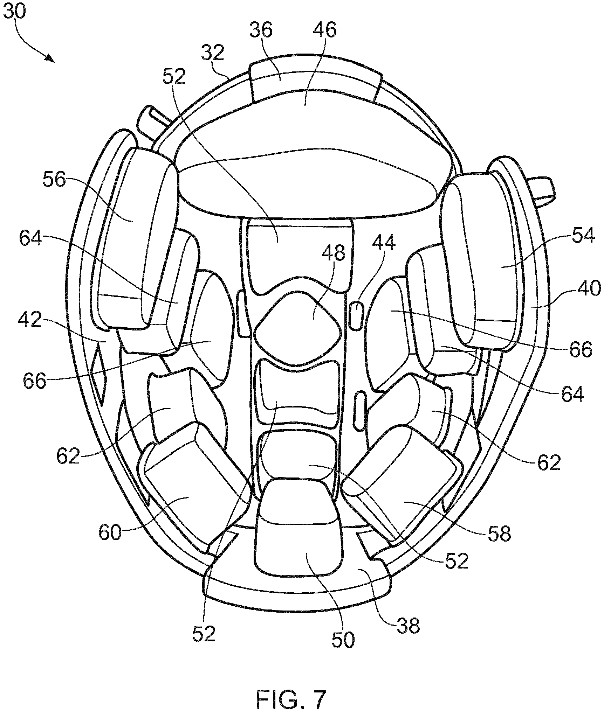

Referring now to Figure 7, a second embodiment of an insert 30 for a helmet is shown within a helmet outer shell 32. The insert 30 of the second embodiment comprises a plurality of insert sections, each of which is a stack of layers similar to the stack 22 of Figure 6. The stacks of the sections may have an overall curvature or may be flat overall. In this embodiment, 16 separate insert sections are present. The sections are arranged in an approximately hemispherical configuration, for insertion into the helmet outer shell 32.

In use, the sections are disposed on the interior of the helmet outer shell 32. There are gaps between the sections. The gaps may be left empty for ventilation or may be filled with a known padding material. Each section is covered by a covering. The covering is a thin and light layer of plastics material. In use, an inner liner (not shown) is provided between the sections and the wearer's head, that is, on the underside of the sections. The sections are orientated such that the layers of the sections are 'end on' to the surface of the helmet. The s direction and *x* direction of each section is therefore tangential to the surface of the helmet. The *n* direction of each section is in a radial direction relative to the wearer's head and the helmet. That is, it is normal to the surface of the helmet.

The outer shell 32 includes a front inner surface 36, a back inner surface 38, a left inner surface 40, a right inner surface 42 and a top inner surface 44. The inner surfaces 36, 38, 40, 42, 44 are joined to form a single continuous inner surface.

A front section 46 is disposed on the front inner surface 36. The front section 46 is broader than the other sections. The front section 46 is adapted to conform to the wearer's forehead. A top section 48 is disposed on the top inner surface 44. A back section 50 is disposed on the back inner surface 38. Further sections 52 are provided between the front section 46 and the top section 48 and between the top section 48 and the back section 50. The further sections 52 and the front 46, top 48 and back 50 sections are close together to form a substantially continuous band extending from the front inner surface 36 to the back inner surface 38.

A left section 54 is provided on the left inner surface 40 and a right section 56 is provided on the right inner surface 42.

Left 58 and right 60 rear sections are provided adjacent to the back section 50. The back section 50 is between the left 58 and right 60 sections. The back section 50, left section 58 and right section 60 form a C shape for receiving the back of the wearer's head.

Additional side sections 62 are provided adjacent to the left 58 and right 60 rear sections. Further additional side sections 64 are provided adjacent to the left section 54 and the right section 56. Upper additional side sections 66 are provided between the additional side sections 62 and the further additional side sections 64. The left and right rear sections 58, 60, additional side sections 62, upper additional side sections 66, further additional side sections 64 and left and right sections 54, 56 collectively form a left L shape and a right L shape. The extrema of each L shape are located proximal to a lower edge of the helmet outer shell 32. The corner of each L shape is located proximal to the top inner surface 48.

Helmet inserts according to either of the above described embodiments are manufactured with an additive manufacturing technique. The first embodiment 10 is manufactured as a single piece. Each section 34 of the second embodiment 30 is manufactured as a single piece.

The additive manufacturing technique used is selective laser sintering. Selective laser sintering is performed by scanning a bed of powdered material with a laser according to a pattern. The pattern is a horizontal cross section of the finished insert. Areas of the powdered material that are scanned by the laser are sintered and transition to a solid material. After scanning, an additional thin layer of powder is dispensed on top of the bed. This process is repeated, varying the pattern incrementally with each iteration to build up a three dimensional structure. Once the structure is complete, un-sintered powder is removed. This technique is known to persons skilled in the art and so will not be described in further detail.

The material used is an ester based thermoplastic polyurethane. Suitable materials include but are not limited to Luvosint (RTM) TPU X92A-1; Luvosint (RTM) TPU X92A-2 and Luvosint (RTM) TPU X97A-1 WT. The ester-based thermoplastic polyurethane has viscoelastic properties.

Parameters of the helmet insert that may be varied include parameters of the layers: the wall thickness of each layer (though in this embodiment all layers are of the same thickness), the fold angles of each layer; parameters of the stacks of layers: a relative translational offset in the *x-n* plane between consecutive layers, a relative rotational offset in the *x-n* plane between consecutive layers; and the orientation of the stacks within the helmet. That is, although in the embodiment described above, the stacking is orientated so that the *x* and *n* directions are tangential relative to the surface of the helmet, other embodiments are possible in which this is not the case. Indeed, any orientation of the stacking within the helmet is possible.

When manufacturing the helmet inserts, these properties are varied in a computer model of the helmet insert. The properties of the material, including mechanical performance in compression, tension and pure shear, must also be characterised. The properties of the computer model are then investigated using finite element analysis techniques. A configuration of these properties that minimises the acceleration of the head of the wearer in the case of an impact is sought.

Some embodiments of the helmet insert are customised for certain situations. Customisation includes variation of any of the above-mentioned parameters. A particular use situation is characterised by an anticipated load environment or by the shape of the wearer's head. In the latter case, bespoke helmet inserts may be produced, or a finite range of inserts may be produced to cater for a variety of categories of head shapes.

## Claims

1. An insert for a helmet comprising a plurality of layers, each layer being of a Miura-Ori fold geometry.

2. An insert for a helmet as claimed in claim 1, in which an upper surface of the insert has an overall curvature to conform to the inner surface of a helmet.

3. An insert for a helmet as claimed in claim 2, in which each layer has an overall curvature.

4. An insert for a helmet as claimed in any preceding claim, the insert comprising a plurality of layers, each layer including a plurality of parallel straight folds and a plurality of transverse folds, each transverse fold being orientated transverse to the plurality of parallel straight folds to intersect the parallel straight folds,
each transverse fold changing direction at each intersection with a parallel straight fold to form a zigzag and being either a mountain fold along its entire extent or a valley fold along its entire extent, the transverse folds being arranged alternately on the layer so that each mountain fold neighbours two valley folds,
and each parallel straight fold alternating along its extent between being a mountain fold and a valley fold, changing from a mountain fold to a valley fold or from a valley fold to a mountain fold at each intersection with a transverse fold.

5. An insert for a helmet as claimed in claim 4, in which each transverse fold has a fold angle, and in which all the transverse folds of each layer have the same fold angle.

6. An insert for a helmet as claimed in claim 5, in which the plurality of layers is divided into a first group and a second group, the transverse folds of the layers of the first group having a first fold angle, and the transverse folds of the layers of the second group having a second fold angle, the first fold angle being greater than the second fold angle, the layers being stacked to alternate between layers of the first group and layers of the second group.

7. An insert for a helmet as claimed in claim 6, in which the fold angle of each transverse fold of each layer of the first group is between 30 degrees and 180 degrees but not equal to 180 degrees, or in which the fold angle of each transverse fold of each layer of the first group is 95 degrees.

8. An insert for a helmet as claimed in claim 6, in which the fold angle of each transverse fold of each layer of the second group is between 25 degrees and 130 degrees, or in which the fold angle of each transverse fold of each layer of the second group is 36 degrees.

9. An insert for a helmet as claimed in any preceding claim, in which a wall thickness of each layer is between 0.5 mm and 2 m, or in which the wall thickness of each layer is 1 mm.

10. An insert for a helmet as claimed in any preceding claim, which is integrally formed by a method such as an additive manufacturing method or a selective laser sintering method or fused deposition modelling.

11. An insert for a helmet as claimed in any preceding claim, further including one or more the following: the insert comprises a viscoelastic material; the insert comprises an elastomeric material; the insert is formed of an ester-based thermoplastic polyurethane.

12. A method of manufacturing an insert for a helmet according to any preceding claim,
the method comprising the step of:
manufacturing a plurality of layers of the insert integrally.

13. A method as claimed in claim 12, in which the step of manufacturing a plurality of layers of the insert integrally includes using an additive manufacturing process, which is optionally selective laser sintering or fused deposition modelling.

14. A method as claimed in claim 12 or claim 13, further comprising the initial steps of:
using finite element analysis to model the dependence of the performance of the insert in an impact on a property of the insert; and
selecting an optimal value of that property based on the result of the above step.

15. A method as claimed in claim 14, in which the property is one of: a fold angle of one of the folds; a wall thickness of one of the layers; a relative offset between a pair of layers.
